# EUROPÄISCHE PATENTSCHRIFT

(11) **EP 1 695 791 B1**
(45) Veröffentlichungstag und Bekanntmachung des Hinweises auf die Patenterteilung: **05.12.2007**
(21) Anmeldenummer: 05003824.9
(22) Anmeldetag: 23.02.2005
(51) Int. Cl.: B23Q 1/01, B23B 39/16, B23Q 39/02

(54) **Bearbeitungsmaschine mit mehreren parallelen Spindelanordnungen**
Machining center with a plurality of parallel spindel units
Machine d'usinage avec plusieurs broches parallèles

(43) Veröffentlichungstag der Anmeldung: 30.08.2006
(73) Patentinhaber: Alfing Kessler Sondermaschinen GmbH, 73433 Aalen (DE)
(72) Erfinder:
(74) Vertreter: Bregenzer, Michael

(56) Entgegenhaltungen:
- DE-C1- 19 652 460
- DE-U1- 20 118 456
- US-A- 5 699 598

## Beschreibung

Die Erfindung betrifft eine Bearbeitungsmaschine zur spanabhebenden Bearbeitung nach dem Oberbegriff des Anspruchs 1.

Die deutsche Patentschrift DE 196 52 460 C1 betrifft eine derartige Mehrspindelmaschine, deren Spindeln an jeweils eigenen Schlitten in unterschiedlichen Höhen angeordnet und unabhängig voneinander verfahrbar sind. Die Schlitten umschließen einander rahmenartig. Die Schlitten sind z.B. übereinander angeordnet.

Die US 5,699,598 zeigt eine Mehrspindelmaschine, deren Spindeln nebeneinander angeordnet sind.

Die deutsche Gebrauchsmusterschrift DE 201 18 456 U1 betrifft eine Bearbeitungsmaschine, die sich z.B. zum Drehen, Fräsen, Bohren oder dergleichen eignet.

Eine andere von der Anmelderin hergestellte Bearbeitungsmaschine mit nebeneinander angeordneten Spindeln bzw. Pinolen ermöglicht eine gleichzeitige mehrspindelige Bearbeitung eines oder mehrerer Werkstückes. Alle Spindeln einer Spindelgruppe werden simultan bewegt, beispielsweise in Richtung der Spindelachsen zu den Werkstücken hin vorgeschoben oder horizontal und/oder vertikal verfahren. Im Sinne einer effizienten und schnellen Werkstückbearbeitung ist dies zwar zweckmäßig. Allerdings ist eine individuelle Längsverstellung der einzelnen Spindeln in Richtung ihrer Spindelachsen nicht möglich, was beispielsweise zum Ausgleich von Werkzeug- und/oder Werkstücktoleranzen, zur Herstellung unterschiedlich tiefer Bohrungen oder dergleichen zweckmäßig wäre.

Es ist daher die Aufgabe der vorliegenden Erfindung, bei einer Bearbeitungsmaschine der eingangs genannten Art die Spindeln der Spindelgruppe in Richtung ihrer jeweiligen Spindelachsen längsverschieblich zu gestalten, wobei eine kompakte Bauform und ein enger Abstand zwischen den Spindelachsen benachbarter Spindelanordnungen erreicht werden soll.

Zur Lösung der Aufgabe ist bei einer Bearbeitungsmaschine der eingangs genannten Art vorgesehen, dass die Führungsanordnungen von jeweils zwei unmittelbar benachbarten Spindelanordnungen der Spindelgruppe an voneinander verschiedenen, einander zugewandten Seiten der Halteeinrichtung angeordnet sind, so dass die Spindelachsen der Spindeln näher beieinander angeordnet sind als bei einer Anordnung der Führungsanordnungen an derselben Seite der Halteeinrichtung.

Bei der erfindungsgemäßen Bearbeitungsmaschine sind die Pinolen bzw. Spindelanordnungen und somit die Spindeln unabhängig voneinander in Richtung der jeweiligen Spindelachsen verfahrbar, so dass eine individuelle Bearbeitung von Werkstücken möglich ist. Die Führungsschienen einer Führungsanordnung liegen verhältnismäßig weit auseinander, jedenfalls weiter als die Breite der jeweiligen Spindel. Dadurch ist die Spindel sicher geführt und an der Halteeinrichtung befestigt. Trotz der weit auseinanderliegenden Führungsschienen ist sind die Spindelachsen benachbarter Spindelanordnungen nahe beieinander angeordnet, weil die jeweiligen Führungsanordnungen an verschiedenen Seiten der Halteeinrichtung befestigt sind. Die benachbarten Spindelanordnungen sind also nicht an derselben Seite der Halteeinrichtung angeordnet, sondern an voneinander verschiedenen Seiten, beispielsweise von Seitenwandungen, der Halteeinrichtung.

Die benachbarten Spindelanordnungen bzw. deren Führungsanordnungen sind an einander zugewandten Seiten der Halteeinrichtung angeordnet. Die einander zugewandten Seiten können beispielsweise einander gegenüberliegen oder winkelig zueinander sein, beispielsweise stumpfwinklig, spitzwinklig oder senkrecht.
Zweckmäßigerweise sind die jeweils benachbarten Spindelanordnungen der Spindelgruppe an gegenüberliegenden Seiten der Halteeinrichtung angeordnet.

Bei allen vorgenannten Varianten der Bearbeitungsmaschine liegen die Spindelachsen der jeweils benachbarten Spindelanordnungen näher beieinander als bei einer Anordnung der benachbarten Spindelanordnungen an derselben Seite der Halteeinrichtung.

Besonders bevorzugt ist eine Bauweise der erfindungsgemäßen Bearbeitungsmaschine, bei der die Spindelanordnungen reihenartig nebeneinander angeordnet sind. Die Spindelachsen der Spindelanordnungen verlaufen dabei entlang einer Reihenachse oder sind zumindest nahe dieser Reihenachse angeordnet. Beispielsweise sind dabei die Spindeln abwechselnd an einer ersten Seite der Halteeinrichtung und an einer zweiten, der ersten Seite gegenüberliegenden Seite der Halteeinrichtung angeordnet und in Richtung ihrer Spindelachsen individuell längsverschieblich. Die Reihenachse verläuft zweckmäßigerweise im wesentlichen horizontal oder vertikal, wobei auch ein schräger Verlauf ohne weiteres möglich ist.

Zweckmäßigerweise ist zwischen den Führungsschienen einer jeweiligen Führungsanordnung eine Antriebseinrichtung zum Antrieb der jeweiligen Spindel in Richtung ihrer Spindelachse angeordnet. Der weite Abstand zwischen den Führungsschienen schafft einen verhältnismäßig großen Einbauraum für die Antriebseinrichtung. Zweckmäßigerweise ist diese Antriebseinrichtung ein Linearantrieb oder enthält einen Linearantrieb.

Der Linearantrieb wird vorzugsweise durch einen elektrischen Linearmotor gebildet, wobei ein Primärteil des Linearmotors an der Spindel und ein Sekundärteil zwischen den Führungsschienen angeordnet ist oder umgekehrt. Das Primärteil weist beispielsweise Wicklungen auf, mit denen ein elektrisches Wanderfeld erzeugbar ist. Das Sekundärteil wird vorzugsweise durch Magnetplatten gebildet. Das Primärteil und/oder das Sekundärteil des elektrischen Linearmotors sind vorzugsweise zwischen jeweiligen Führungsschienen einer jeweiligen Führungsanordnung platziert.

Ein alternatives Antriebskonzept für die individuelle Längsverstellung einer Spindelanordnung in Richtung ihrer Spindelachse kann auch einen Spindelantrieb vorsehen, beispielsweise einen Kugelumlaufantrieb.

Die Halteeinrichtung, beispielsweise der Halterahmen, ist zweckmäßigerweise an einem Grundgestell der Bearbeitungsmaschine in mindestens einer Richtung quer zu den Spindelachsen verschieblich oder verfahrbar gelagert, beispielsweise vertikal und/oder horizontal. Wenn die Spindelachsrichtung einer Z-Achse der Bearbeitungsmaschine entspricht, ist die Halteeinrichtung an dem Grundgestell beispielsweise in X-Richtung und/oder Y-Richtung verschieblich oder verfahrbar.

Die Halteeinrichtung ist vorteilhafterweise als ein Vertikalschlitten oder ein Horizontalschlitten ausgestaltet oder an einem solchen Schlitten angeordnet, der vertikal bzw. horizontal an dem Grundgestell verfahrbar ist. Das Grundgestell weist zweckmäßigerweise einen Grundgestell-Horizontalschlitten oder einen Grundgestell-Vertikalschlitten auf, der relativ zu einem Basisteil der Bearbeitungsmaschine, z.B. einem Maschinenbett, horizontal bzw. vertikal verfahrbar ist. An dem Grundgestell-Horizontalschlitten oder Grundgestell-Vertikalschlitten ist die Halteeinrichtung vorteilhaft vertikal bzw. horizontal verfahrbar.

Besonders bevorzugt ist bei der erfindungsgemäßen Bearbeitungsmaschine ein Rahmenkonzept bei der Halteeinrichtung und zweckmäßigerweise auch bei dem Grundgestell bzw. den Schlitten des Grundgestells, beispielsweise dem Grundgestell-Horizontal- oder Vertikalschlitten. Dabei ist ein Rahmen-in-Rahmen-Konzept bzw. Box-in-Box-Konzept zweckmäßig, das heißt, dass die Rahmen sozusagen ineinander geschachtelt sind.

Beispielsweise wird die Halteeinrichtung durch einen Halterahmen gebildet, in dem die Spindelgruppe angeordnet ist. Der Rahmen weist eine große Stabilität auf und umgibt die Spindelanordnungen der Spindelgruppe. Dieser Halterahmen ist an dem ebenfalls rahmenartigen Grundgestell-Horizontal- oder Vertikalschlitten zweckmäßigerweise vertikal bzw. horizontal verfahrbar angeordnet. Der Grundgestell-Horizontal- oder Vertikalschlitten ist seinerseits zweckmäßigerweise an einem Basisrahmen des Grundgestell horizontal bzw. vertikal verfahrbar angeordnet.

Ein vorteilhaftes Konzept der erfindungsgemäßen Bearbeitungsmaschine kann vorsehen, dass zwei oder mehr erfindungsgemäße Spindelgruppen vorhanden sind, bei denen die jeweiligen Spindeln an voneinander verschiedenen Seiten einer der jeweiligen Spindelgruppe zugeordneten Halteeinrichtung angeordnet sind. Die Spindelachsen einer jeweiligen derartigen Spindelgruppe sind zweckmäßigerweise in Reihenrichtung nebeneinander angeordnet. Vorteilhafterweise sind die Spindelachsen aller relativ zueinander verschieblichen bzw. verfahrbaren Spindelngruppe in dieser Reihenrichtung nebeneinander angeordnet. Es versteht sich, dass auch unterschiedliche Reihenrichtungen möglich sind, beispielsweise derart, dass die Spindelachsen einer ersten erfindungsgemäßen Spindelgruppe horizontal nebeneinander liegen und die Spindelachsen einer zweiten erfindungsgemäßen Spindelgruppe vertikal nebeneinander liegen.

Nachfolgend werden Ausführungsbeispiele der Erfindung anhand der Zeichnung beispielhaft erläutert.

Es zeigen:
- Figur 1: ein erstes Ausführungsbeispiel einer erfindungsgemäßen Bearbeitungsmaschine mit vertikal übereinander angeordneten Spindelanordnungen oder Pinolen,
- Figur 2: ein zweites Ausführungsbeispiel einer erfindungsgemäßen Bearbeitungsmaschine mit horizontal nebeneinander angeordneten Spindeln einer Spindelgruppe,
- Figur 3: eine Spindelgruppe der Bearbeitungsmaschine gemäß Figuren 1 oder 2 mit vier Spindelanordnungen im Detail,
- Figur 4: eine Alternative zu der Spindelgruppe gemäß Figur 3 mit drei nebeneinander angeordneten Spindeln einer erfindungsgemäß aufgebauten Spindelgruppe,
- Figur 5: zwei relativ zueinander verschiebliche Spindel-Teilgruppen in einer erfindungsgemäßen Spindelgruppe in einer ersten Stellung, bei der die Teilgruppen nahe beieinander angeordnet sind,
- Figur 6: die Spindelgruppe gemäß Figur 5 in einer Stellung, bei der die Teilgruppen voneinander entfernt sind,
- Figur 7: eine erfindungsgemäße Spindelgruppe mit drei an drei voneinander verschiedenen, beispielsweise zueinander rechtwinkligen Seiten einer Halteeinrichtung angeordneten Spindeln, und
- Figur 8: eine Spindelgruppe mit zwei Spindeln, die an zueinander stumpfwinklig verlaufenden Seiten einer Halteeinrichtung angeordnet sind.

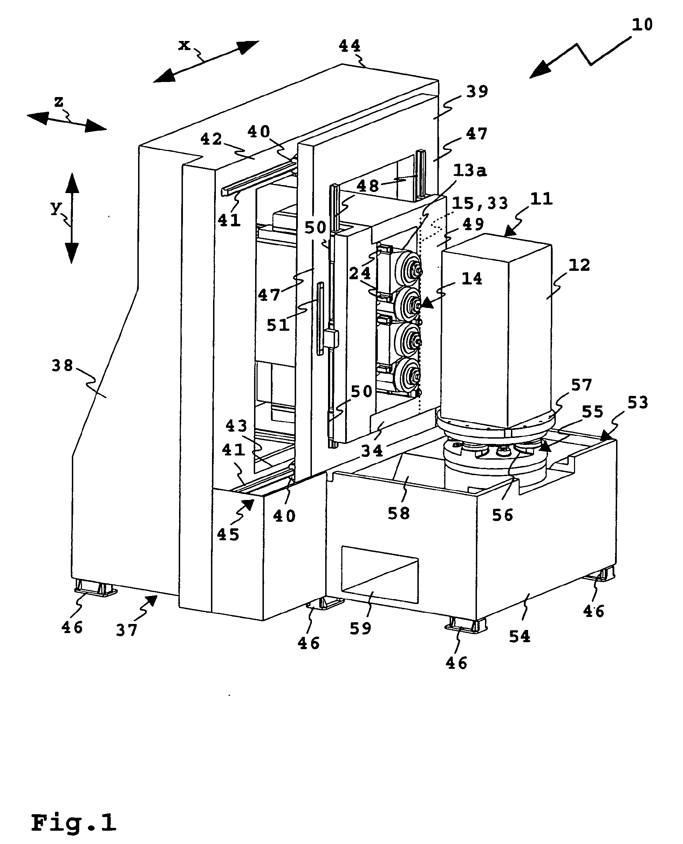

Eine Bearbeitungsmaschine 10 in Figur 1 ist zur spanabhebenden Bearbeitung von Werkstücken 11 ausgestaltet, die von einem Werkstückhalter oder Werkstückträger 12 gehalten werden. Die Bearbeitungsmaschine 10 ist eine Mehrspindel-Maschine mit mehreren, vorliegend vier Pinolen oder Spindelanordnungen 13a bis 13d einer Spindelgruppe 14. Die Spindelanordnungen 13a bis 13d sind in einer Reihenrichtung 15 nebeneinander, bei der Bearbeitungsmaschine 10 vertikal übereinander angeordnet.

Die Spindeleinheiten oder Spindelanordnungen 13a bis 13d weisen jeweils eine in einem Spindelgehäuse 16 angeordnete Spindel 17 auf, die durch einen in der Zeichnung nicht sichtbaren, beispielsweise in die Spindel 17 integrierten oder hinten an die Spindel 17 angeordneten Motor antreibbar ist. Prinzipiell sind auch erfindungsgemäß angeordnete Spindelanordnungen möglich, bei denen das Spindelgehäuse einer Spindelanordnung zwei Spindeln enthält.

An einem jeweiligen Spindelkopf 18 an einem vorderen, den Werkstücken 11 zugewandten Ende einer Spindelwelle 19 einer Spindelanordnung 13a bis 13d ist ein nicht dargestelltes Werkzeug, beispielsweise ein Bohrer, ein Fräswerkzeug, ein Drehmeißel oder ein sonstiges Werkzeug zur spanabhebenden Bearbeitung der Werkstücke 11 einspannbar, beispielsweise an Werkzeugaufnahmen 20 an den Spindelköpfen 18.

Die Spindelanordnungen 13a bis 13d sind an Führungsanordnungen 21 in Richtung der Spindelachsen 22 der Spindeln 17 längsverschieblich entsprechend einer Z-Richtung an einer Halteeinrichtung 23 gelagert. Somit können die Spindeln 17 individuell in Richtung ihrer Spindelachsen 22, das heißt in der Z-Richtung der Bearbeitungsmaschine 10 nach vorn oder hinten zu den Werkstücken 11 hin oder von diesen weg positioniert werden.

Jede Führungsanordnung 21 weist zwei Führungsschienen 24 zur Führung von Führungselementen 25. Vorliegend sind die Führungsschienen 24 an den Spindelgehäusen 16 und die Führungselemente 25 an der Halteeinrichtung 23 angeordnet, wobei auch eine umgekehrte Konfiguration möglich ist. Die Führungsschienen 25 sind jeweils seitlich außen an einer Boden- oder Basisseite 26 der Spindelgehäuse 16 angeordnet. Die Basisseite 26 ist breiter als die Spindel 17. Der äußere Abstand 27 der Führungsschienen 24 ist größer als die Breite 28 der Spindel 17. Somit sind die Spindelanordnungen 13a bis 13d sicher an der Halteeinrichtung 23 befestigt und an dieser geführt. Zudem ist zwischen den jeweiligen Führungsschienen 24 ein ausreichend großer Einbauraum für eine Antriebseinrichtung 29, beispielsweise in Gestalt eines Linearantriebs bzw. elektrischen Linearmotors 30 vorhanden.

Nachteilig ist allerdings, dass durch den großen äußeren Abstand 27 bzw. die Breite der Führungsanordnung 21 die Spindelanordnungen 13a bis 13d und somit die Spindelachsen 22 an sich weit voneinander beabstandet sein müssten. Um dieser Problematik abzuhelfen, sind bei der Bearbeitungsmaschine 10 die Spindelanordnungen 13a bis 13d an voneinander verschiedenen, vorliegend einander gegenüberliegenden Seiten 31 und 32 der Halteeinrichtung 23 angeordnet.

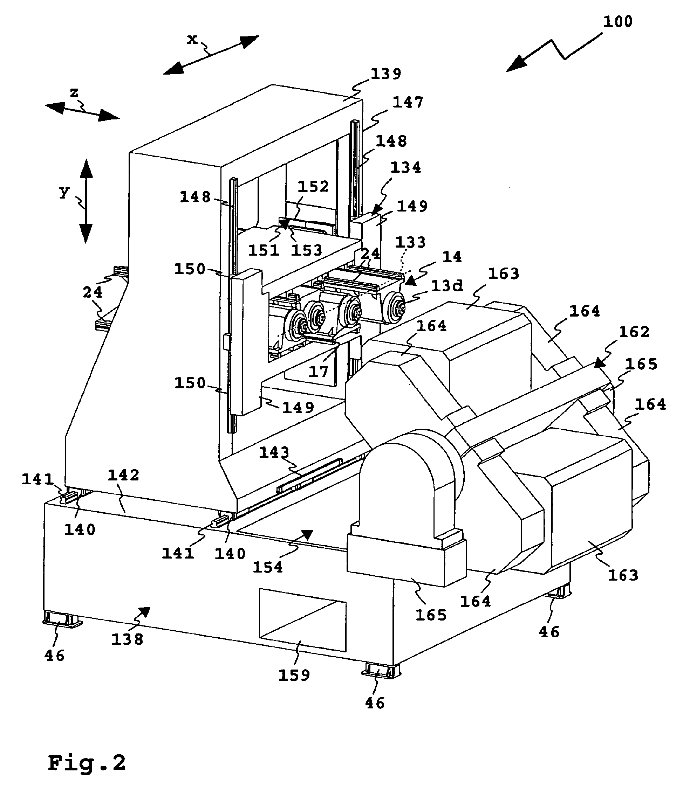

Die Spindelanordnungen 13a bis 13d sind abwechselnd an der Seite 31 und der Seite 32 angeordnet, so dass die Spindelachsen 22 entlang einer Reihenachse 33 vertikal oder bei einer Bearbeitungsmaschine 100 gemäß Figur 2 horizontal, nebeneinander liegen. Die Spindelanordnung 13b ist beispielsweise zwischen den Spindelanordnungen 13a und 13c positioniert, wobei durch die abwechselnde Anordnung an den Seiten 31 und 32 der Halteeinrichtung 23 die jeweiligen Spindelachsen 22 näher beieinander angeordnet sind, das heißt vorliegend in Reihenrichtung 15 weniger weit voneinander beabstandet sind, als bei einer in der Figur nicht dargestellten Reihenanordnung der Spindelanordnungen 13a bis 13d an derselben Seite der Halteeinrichtung 23.

Die elektrischen Linearmotoren 30 bauen zwar verhältnismäßig flach, benötigen aber eine verhältnismäßig große Einbaubreite. Bei elektrischen Motoren besteht ein Zusammenhang zwischen Abmessungen und Leistung, so dass durch die erfindungsgemäße Konfiguration der Spindelgruppe 14 bzw. der Anordnung der Spindeln 17 innerhalb der Spindelgruppe 14 an in entgegengesetzten Seiten 31, 32 der Halteeinrichtung 23, ein großer Einbauraum für die Linearmotoren 30 bereitgestellt wird und diese entsprechend leistungsfähig und schnell sind. Ein jeweiliges Primärteil 60 eines Linearmotors 30 ist an der unteren Basisseite 26 des Spindelgehäuse 16 angeordnet. Das Primärteil 60 enthält beispielsweise elektrische Wicklungen. Ein dem Primärteil 60 zugeordnetes Sekundärteil, im vorliegenden Falle in Ständer des Linearmotors 30, ist zwischen den Führungsschienen 24 angeordnet. Das Sekundärteil 61 enthält beispielsweise Magnetplatten.

Die Halteeinrichtung 23 ist als ein Halterahmen 34 ausgebildet, in dem die Spindelanordnungen 13a bis 13d angeordnet sind. Die Seiten 31 und 32 sind beispielsweise die Innenseiten von einander gegenüberliegenden Seitenwandungen 35, 36 des sehr stabilen und verwindungssteifen Halterahmens 34.

Der Halterahmen 34 ist an einem mit Füßen 46 versehenen Maschinenbett oder Grundgestell 37 der Bearbeitungsmaschine 10 vertikal und horizontal beweglich gelagert.

An einem turmartigen Grundrahmen 38 des Grundgestells 37 ist vorn ein Horizontalschlitten 39 horizontal, in der Zeichnung in X-Richtung, beweglich geführt. An dem Horizontalschlitten 39 ist der Halterahmen 34 vertikal entsprechend einer Y-Richtung verstellbar geführt, so dass der Halterahmen 34 einen Vertikalschlitten bildet. An der Rückseite des Horizontalschlittens 39 oben und unten angeordnete Führungselemente 40 sind an Horizontalschienen 41 geführt, die an einer oberen und einer unteren Quertraverse 42, 43 des Grundrahmens 38 vorn angeordnet sind. Im Bereich der Quertraversen 42, 43 überdeckt der Horizontalschlitten 39 den Grundrahmen 38 und kann sich somit optimal an diesem abstützen. In der Zeichnung nicht sichtbare Antriebseinrichtungen, vorzugsweise Linearmotoren, dienen zum Verfahren des Horizontalschlittens 39 relativ zum Grundrahmen 38. Diese Antriebseinrichtungen werden ebenso wie die Antriebseinrichtungen 29 und weitere Antriebe der Bearbeitungsmaschine 10 durch eine nicht dargestellte Steuerung, beispielsweise eine numerische Steuerung, eine speicherprogrammierbare Steuerung oder dergleichen gesteuert.

An der unteren Vorderseite des Grundrahmens 38 ist eine Art Schutz-Abdeckung 45 angebracht, hinter der die untere Horizontalschiene 41 angeordnet ist und die den unteren Bereich des Horizontalschlittens 39 überdeckt. Hinter der Abdeckung 45 ist z.B. eine Auffangwanne für Bearbeitungsrückstände ausgebildet.

Der Halterahmen 34 ist in den Horizontalschlitten 39 eingesetzt und erstreckt sich in Z-Richtung in den Grundrahmen 38 hinein. An seitlichen Vertikalträgern 47 des Horizontalschlittens 39 sind vorne Vertikalschienen 48 zur vertikalen Führung des Halterahmens 34 angeordnet. Im Bereich der Vertikalschienen 48 überlappen vordere, seitliche Abschnitte 49 des Halterahmens 34 die Vertikalschienen 48. An diesen Abschnitten 49 sind hinten Führungselemente angeordnet, die an den Vertikalschienen 48 geführt sind. Somit kann sich auch der Halterahmen 34 an dem Horizontalschlitten 39 von vorn abstützen, was zur Stabilität der Anordnung beiträgt. Der Horizontalschlitten 39 ist mittels nicht dargestellter Antriebseinrichtungen, beispielsweise Linearmotoren, vertikal verfahrbar. Ein Wegemesssystem 51 dient zur Ermittlung der jeweiligen Vertikalposition des Halterahmens 34.

Die Seitenwandungen 35, 36 erstrecken sich nach hinten in den Bereich des Grundrahmens 38 hinein, so dass mit Hilfe der Führungsanordnungen 21 ein großer Verstellweg der Spindel 17 in Z-Richtung möglich ist.

Die Werkstücke werden an einer Bearbeitungsstation 53 im vorderen Bereich der Bearbeitungsmaschine 10 bereitgestellt. Bei der Bearbeitungsstation 53 sind im Grunde genommen beliebige Ausgestaltungen möglich, wie später noch im Zusammenhang mit der Bearbeitungsmaschine 100 gemäß Figur 2 deutlich wird.

Bei der Bearbeitungsstation 53 der Bearbeitungsmaschine 10 ist ein z.B. als Drehtisch ausgebildeter Werkstücktisch 55 in einem Aufnahmekasten 54 für Bearbeitungsrückstände, insbesondere Metallspäne oder dergleichen, angeordnet. Anstelle des Werkstücktisches 55 könnte beispielsweise auch eine Anordnung mit zwei an einem Schwenkarm befestigten Werkstücktischen vorgesehen sein, die abwechselnd in den Bereich des Aufnahmekastens 54 schwenkbar sind, wobei an dem jeweils nach außen geschwenkten Werkstücktisch die Werkstücke 11 gewechselt werden können. An dem Werkstücktisch 55 sind oberseitig Befestigungseinrichtungen 56 vorhanden, an denen im Ausführungsbeispiel eine Palette 57 befestigt, beispielsweise angeschraubt, ist. Auf der Palette 57 bzw. dem Werkstücktisch 55 ist der vorliegend turmartige oder schrankartige Werkstückhalter 12 montiert. Anstelle des Werkstückhalters 12 kann auch unmittelbar ein Werkstück auf der Palette 57 oder dem Werkstücktisch 55 befestigt sein, das gleichzeitig oder nacheinander mit Hilfe der Spindeln 17 bearbeitbar ist. Dabei ist die Bearbeitungstiefe in Z-Richtung individuell einstellbar, weil die Spindeln 17 in Z-Richtung mittels der Führungsanordnungen 21 individuell verstellbar sind. Somit sind beispielsweise auch Toleranzen ausgleichbar, die z.B. durch unterschiedlich beschaffene Werkstücke, Werkzeuge, durch Abnützung der Werkzeuge oder dergleichen verursacht sind.

Bei der Bearbeitung der Werkstücke 11 anfallende Bearbeitungsrückstände, Metallspäne oder dergleichen, können in Ablaufmulden 58, die durch entsprechende Schrägwandungen des Aufnahmekastens 54 gebildet sind, in Richtung eines Spanabfuhrkanals 59 entsorgt werden. In dem Spanabfuhrkanal 59 kann ein in der Figur nicht dargestelltes Spanabfuhrband angeordnet werden.

Die Bearbeitungsmaschine 100 gemäß Figur 2 weist teilweise ähnliche Komponenten wie die Bearbeitungsmaschine 10 auf, so dass gleiche oder gleichartige Komponenten wie bei der Bearbeitungsmaschine 10 im folgenden nicht näher erläutert sind und dieselben Bezugszeichen tragen. Insbesondere ist auch bei der Bearbeitungsmaschine 100 eine Spindelgruppe 14 mit erfindungsgemäß angeordneten Spindelanordnungen 13a bis 13d vorhanden, allerdings mit dem Unterschied, dass die Reihenrichtung 15 bzw. die Reihenachse 33 nicht vertikal, sondern horizontal verläuft. In Figur 2 wird insbesondere deutlich, dass die Spindeln 17 individuell in Z-Richtung, also zu den Werkstücken 11 hin bzw. von diesen weg verfahrbar sind.

An einem Maschinenbett oder Grundrahmen 138 der Bearbeitungsmaschine 100 ist ein turmartiger Horizontalschlitten 139 an Horizontalschienen 141 horizontal verschiebbar bzw. verfahrbar geführt. Die Horizontalschienen 141 sind zueinander in Z-Richtung der Bearbeitungsmaschine 100 beabstandet und verlaufen in X-Richtung an einer oberen Wandung 142 des Grundrahmens 138 im hinteren Bereich der Bearbeitungsmaschine 100. An der Unterseite des Horizontalschlittens 139 sind Führungselemente 140 angeordnet, die an den Horizontalschienen 141 geführt sind. Zur Horizontalverstellung des Horizontalschlittens 139 ist ein nicht dargestellter Antrieb vorgesehen, beispielsweise ein Linearantrieb, der an der Unterseite des Horizontalschlittens 139 bzw. an der oberen Wandung 142 des Grundrahmens 138 angeordnet ist. Ein Wegemesssystem 143 dient zur Ermittlung der Horizontalposition des Horizontalschlittens 139 relativ zum Grundrahmen 138.

An dem Horizontalschlitten 139 ist ein Halterahmen 134 als eine erfindungsgemäße Halteeinrichtung 23 für die Spindelgruppe 14 vertikal verschiebbar bzw. verfahrbar angeordnet und bildet einen Vertikalschlitten. Der Halterahmen 134 erstreckt sich in Z-Richtung in den Horizontalschlitten 134 hinein, so dass in Z-Richtung ein verhältnismäßig langer Verstellweg der Spindeln 17 bei gleichzeitig zuverlässiger Führung der Führungsanordnungen 21 möglich ist.

An Vertikalträgern 147 des Horizontalschlittens 139 sind vorn Vertikalschienen 148 angeordnet, die von vorderen seitlichen Abschnitten 149 des Halterahmens 134 zumindest teilweise überdeckt werden. An der Rückseite dieser Abschnitte 149 befinden sich Führungen oder Führungselemente 150, die an den Vertikalschienen 148 geführt sind. Eine Vertikal-Antriebseinrichtung 151 dient zum vertikalen Antrieb des Halterahmens 134 relativ zum Horizontalschlitten 139. Die Antriebseinrichtung 151 ist beispielsweise ein Linearmotor in der Art der Linearmotoren 30, wobei im vorliegenden Fall Magnetplatten 152 an der dem Halterahmen 134 zugewandten Innenseite der Vertikalträger 147 angeordnet sind, die mit einem entsprechenden Primärteil 153 am Halterahmen 34 zusammenwirken. Ein in der Figur nicht sichtbares Vertikal-Wegemesssystem dient zur Ermittlung der Vertikalposition des Halterahmens 134 relativ zum Horizontalschlitten 139.

In seinem vorderen Bereich ist der Grundrahmen 138 als ein Aufnahmekasten 154 zur Aufnahme von Bearbeitungsrückständen, insbesondere Metallspänen, ausgestaltet. Im unteren Bereich des Aufnahmekastens 154 verläuft ein Spanabfuhrkanal 159, in dem ein Spanabfuhrband anordenbar ist. Der Spanabfuhrkanal 159 verläuft parallel zur horizontalen Reihenachse 133 der Spindeln 17 und unterhalb der Spindeln 17.

Eine vor den Spindeln 17 im Bearbeitungsbereich angeordnete Werkstück-Schwenkhalterung 162 dient zur Bereitstellung von Werkstücken 11 für die Bearbeitung mittels der Spindeln 17. Zwei Werkstückpaletten oder Werkstückhalterungen 163, die in Richtung der Reihenachse 133 der Spindeln 17 orientiert sind, sind an Schwenkarmpaaren 164 drehbar gelagert. Die Schwenkarmpaare 164 sind schwenkbar an seitlichen, armartigen Schwenkhalterungen 165 gelagert, die sich im vorderen Bereich des Grundrahmens 138 nach oben erstrecken. Somit kann abwechselnd jeweils eine der Werkstückhalterungen 163 zu den Spindeln 17 hin geschwenkt werden, so dass die in der jeweiligen Werkstückhalterung bzw. Werkstückpalette 163 befindlichen Werkstücke 11 durch die Spindeln 17 bearbeitet werden können. An der von den Spindeln 17 weggeschwenkten Werkstückhalterungen 163 können die Werkstücke 11 gewechselt werden. Durch die Schwenkarmpaare 164 bzw. Schwenkhalterung 165, die eine Schwenkanordnung bilden, sind die Werkstückhalterungen bzw. - paletten 163 relativ zur Spindelgruppe 14 drehpositionierbar. An den vier Seiten der Werkstückhalterungen 163 können jeweils Werkstücke 11 angeordnet sein.

Es versteht sich, dass anstelle der Werkstückhalterungen 163 auch entsprechende in der Figur nicht dargestellte Werkstücke unmittelbar an den Schwenkarmen 164 drehbar befestigbar sind. Ferner ist es möglich, dass beispielsweise eine der Werkstückschwenkpaletten durch eine Werkzeugpalette ersetzt wird, so dass ein automatisierter Werkzeugwechsel für die Spindeln 17 möglich ist.

Nachfolgend werden alternative Anordnungen nebeneinanderliegender Spindeln gemäß dem erfindungsgemäßen Konzept vorgestellt.

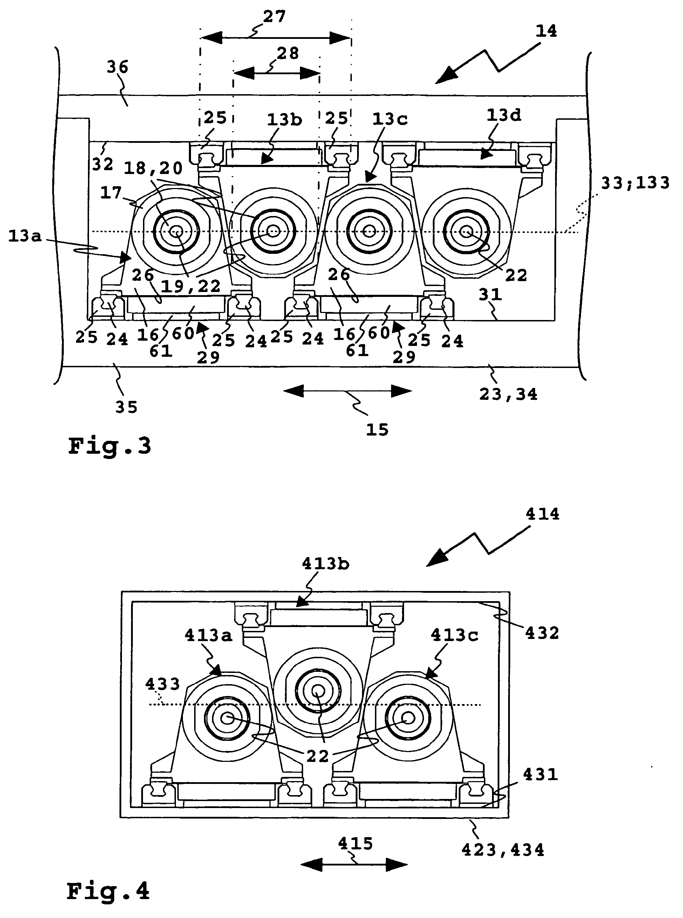

Bei einer Spindelgruppe 414 gemäß Figur 4 sind Spindelanordnungen 413a bis 413c in einer Reihenrichtung 415 nebeneinander angeordnet. Die Bauart der Spindelanordnungen 413a bis 413c entspricht der Bauart der Spindelanordnungen 13a bis 13d. Die Spindelanordnungen 413a und 413c sind an einer ersten Seite 431 einer als Halterahmen 434 ausgestalteten Halteeinrichtung 423 angeordnet, wohingegen die zwischen den Spindelanordnungen 413a und 413c positionierte Spindelanordnung 413b an einer der Seite 431 gegenüberliegenden Seite 432 befestigt ist. Durch die abwechselnde Anordnung der Spindelanordnungen 413a bis 413c an einander gegenüberliegenden Seiten 431, 431 der Halteeinrichtung 423 sind die Spindelachsen 22 näher beieinander als bei einer Anordnung an derselben Seite der Halteeinrichtung 423. Allerdings befinden sich die Spindelachsen 22 im Unterschied zu den vorherigen Beispielen nicht auf einer gemeinsamen Reihenachse 433 der Spindelgruppe 414, sondern neben dieser Reihenachse 433, z.B. abwechselnd ober- und unterhalb der Reihenachse 433. Die Spindelgehäuse 16 sind mit Bezug auf die Basisseite 26 leicht konisch, so dass durch den vorliegenden Abstand der Spindelachsen 22 von der Reihenachse 433 die Spindelachsen 22 in Reihenrichtung 415 besonders nahe beieinander angeordnet sind.

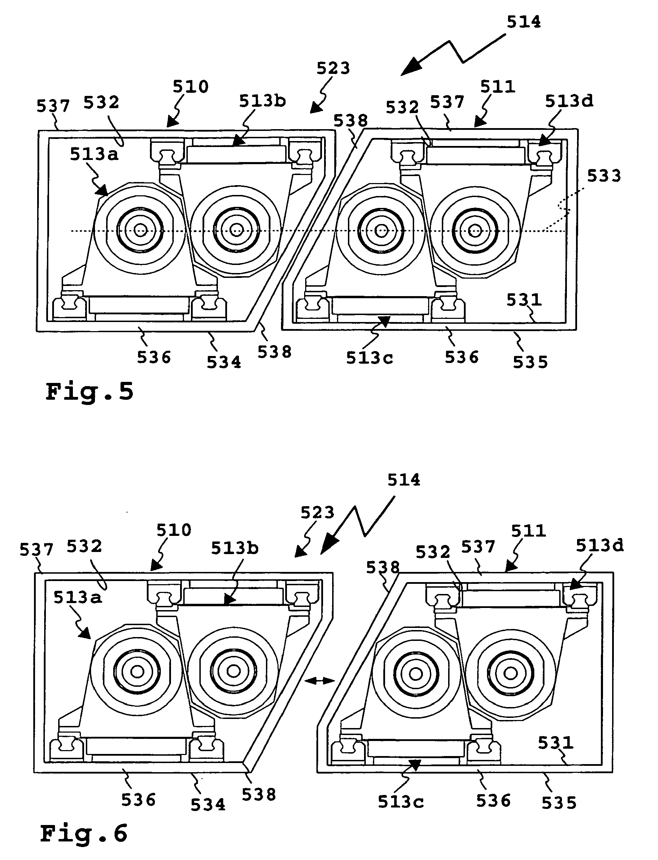

Bei einem vierten Ausführungsbeispiel gemäß Figuren 5 und 6 ist eine erfindungsgemäße Spindelgruppe 514 in zwei Teilgruppen 510 und 511 gegliedert und vorliegend geteilt. Dabei sind Spindelanordnungen 513a und 513b in einem ersten Halterahmen 534 und Spindelanordnungen 513c und 513d in einem zweiten Halterahmen 535 der Halteeinrichtung 523 angeordnet. Die Spindelanordnungen 513a bis 513d sind an einander gegenüberliegenden Seiten 531, 532 der Halteeinrichtung 523 abwechselnd angeordnet, wobei die Spindelachsen 22 in einer Reihenachse 533 nebeneinander angeordnet sind. Die beiden Halterahmen 534, 535 und somit die Teilgruppen 510, 511 sind relativ zueinander verschieblich, und zwar vorliegend entlang der Reihenachse 533. In Figur 5 sind die Halterahmen 534, 535 nahe beieinander dargestellt. In Figur 6 sind die Halterahmen 534, 535 voneinander entfernt. Zum Verschieben der Halterahmen 534, 535 sind zweckmäßigerweise in der Figur nicht dargestellte Antriebseinrichtungen vorgesehen. Die Spindelachsen 22 der Spindelanordnungen 513a und 513b bzw. 513c und 513d liegen innerhalb der Teilgruppen 510 bzw. 511 in der Reihenachse 533 nahe beieinander, weil die jeweiligen Spindelanordnungen 513a bis 513d an einander gegenüberliegenden Seitenwandungen 536 und 537 der jeweiligen Halterahmen 534, 535 angeordnet sind. Aber auch die in verschiedenen Teilgruppen 510, 511 angeordneten Spindelanordnungen 513b und 513c können, wie in Figur 5 ersichtlich ist, erfindungsgemäß nahe beieinander positioniert werden, jedenfalls näher beieinander, als bei einer Anordnung der Spindelanordnungen 513b, 513c an derselben Seite der Halteeinrichtung 523. Damit die Halterahmen 534 und 535 nahe nebeneinander positionierbar sind, verlaufen Seitenwandungen 538 der Halterahmen 534, 535 neben den Spindelanordnungen 513b und 513c entsprechend der benachbarten Außenkontur der jeweiligen Spindelgehäuse 16 schräg und erlauben so eine besonders nahe Positionierung der Spindelanordnungen 513b und 513c beieinander.

Es versteht sich, dass als Abwandlung des Ausführungsbeispiels gemäß Figuren 5 und 6 die Spindelanordnungen einer Teilgruppe an einer ersten Seite der jeweiligen Halteeinrichtung und die Spindelanordnungen einer zweiten Teilgruppe an einer zweiten, von der ersten Seite verschiedenen Seite der Halteeinrichtung angeordnet sein könnten. Mit Bezug auf das Ausführungsbeispiel gemäß Figuren 5 und 6 könnten beispielsweise die Spindelanordnungen 513a und 513b an einer ersten und die Spindelanordnungen 513c und 513c an einer zweiten, der ersten Seite gegenüberliegenden Seite der Halteeinrichtung angeordnet sein.

Ferner ist erfindungsgemäß ein Baukastenprinzip realisierbar. Beispielsweise können einzelne Spindelanordnungen, Spindelgruppen oder Teilgruppen erfindungsgemäß an verschiendenen Seiten einer Halteeinrichtung angeordnet und vorzugsweise relativ zueinander verfahrbar sein

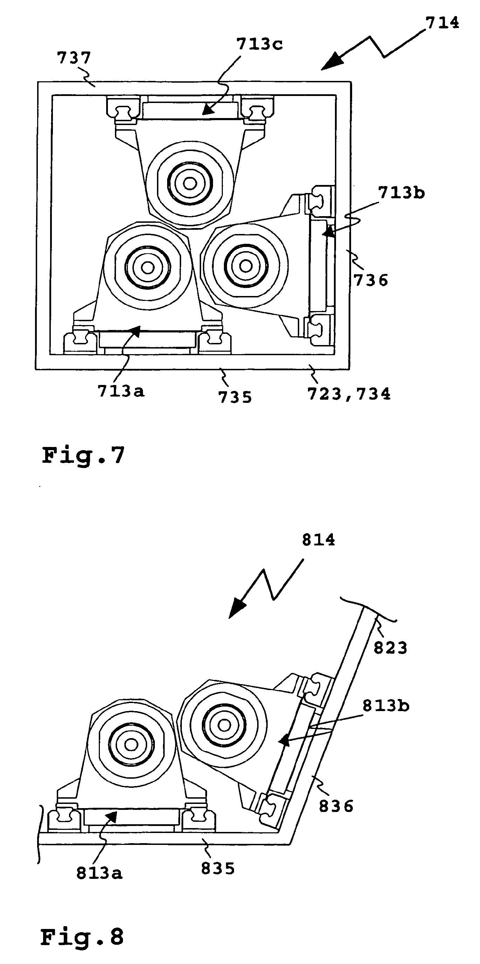

Bei einer Spindelgruppe 714 gemäß Figur 7 sind Spindelanordnungen 713a bis 713c an zueinander rechtwinkeligen Seitenwandungen 735, 736, 737 einer Halteeinrichtung 723 in Gestalt eines Halterahmens 734 in Richtung ihrer jeweiligen Spindelachsen 22 längsverschieblich angeordnet. Die Spindelanordnungen 713a bis 713c entsprechen in ihrem Aufbau den Spindelanordnungen 13a bis 13d.

Bei einer Spindelgruppe 814 gemäß Figur 8 sind Spindelanordnungen 813a und 813b, die im Aufbau den Spindelanordnungen 13a bis 13d entsprechen, an zueinander stumpfwinkelig verlaufenden Seitenwandungen 835, 836 einer Halteeinrichtung 823 in Richtung ihrer Spindelachsen 22 längs verschieblich gelagert.

Bei den Ausführungsbeispielen gemäß Figuren 7 und 8 liegen die Spindelachsen 22 der Spindelanordnungen 713a bis 713c bzw. 813a und 813b näher beieinander als es der Fall wäre, wenn die jeweiligen Spindelanordnungen an der selben Seite der zugeordneten Halteeinrichtung 723, 823 angeordnet wären.

Bei einer alternativen Bauform erfindungsgemäßer Spindelanordnungen könnten die der jeweiligen Spindel zugeordneten Bauteile der Führungsanordnung auch unmittelbar an der Spindel befestigt sein, so dass ein Spindelgehäuse, wie bei den Ausführungsbeispielen, nicht erforderlich ist. Beispielsweise wären in diesem Fall die Führungsschienen 24 unmittelbar an den Spindeln 17 befestigt, beispielsweise angeschraubt, geschweißt, geklebt oder dergleichen.

## Patentansprüche

1. Bearbeitungsmaschine zur spanabhebenden Bearbeitung von Werkstücken (11) mit einer Spindelgruppe (14; 414; 514; 714; 814) mit mindestens zwei nebeneinander angeordneten Spindelanordnungen (13a-d; 413a-d; 513a-d; 713a-d; 813a-d), wobei jede Spindelanordnung (13a-d; 413a-d; 513a-d; 713a-d; 813a-d) eine Spindel (17) zur Aufnahme eines spanabhebenden Werkzeuges aufweist, wobei jede Spindelanordnung (13a-d; 413a-d; 513a-d; 713a-d; 813a-d) an einer Führungsanordnung (21) in Richtung der Spindelachse (22) der jeweiligen Spindel (17) längsverschieblich an einer Halteeinrichtung (23; 423; 523; 723; 823) für die Spindelgruppe (14; 414; 514; 714; 814) geführt ist, dass jede Führungsanordnung einen äußeren Abstand (27) aufweist, der größer ist als die Breite (28) der jeweiligen Spindel (17), wobei jede Führungsanordnung (21) zwei Führungsschienen (24) aufweist, deren Abstand den äußeren Abstand (27) der Führungsanordnung (21) definiert, **dadurch gekennzeichnet, dass** die Führungsanordnungen (21) von jeweils zwei unmittelbar benachbarten Spindelanordnungen (13a-d; 413a-d; 513a-d; 713a-d; 813a-d) der Spindelgruppe (14; 414; 514; 714; 814) an voneinander verschiedenen, einander zugewandten Seiten der Halteeinrichtung (23; 423; 523; 723; 823) angeordnet sind, so dass die Spindelachsen (22) der Spindeln (17) näher beieinander angeordnet sind als bei einer Anordnung der Führungsanordnungen (21) an derselben Seite der Halteeinrichtung (23; 423; 523; 723; 823).

2. Bearbeitungsmaschine nach Anspruch 1, **dadurch gekennzeichnet, dass** die voneinander verschiedenen Seiten der Halteeinrichtung (23; 423; 523; 723; 823) einander gegenüber liegen.

3. Bearbeitungsmaschine nach Anspruch 2, **dadurch gekennzeichnet, dass** die mindestens zwei Spindelanordnungen (13a-d; 413a-d; 513a-d; 713a-d; 813a-d) reihenartig nebeneinander angeordnet sind, wobei die Spindelachsen (22) in einer Reihenachse (33; 133; 433; 533) oder nahe einer Reihenachse (33; 133; 433; 533) nebeneinander angeordnet sind.

4. Bearbeitungsmaschine nach Anspruch 3, **dadurch gekennzeichnet, dass** die Reihenachse (33; 133; 433; 533) im wesentlichen horizontal oder vertikal verläuft.

5. Bearbeitungsmaschine nach Anspruch 1, **dadurch gekennzeichnet, dass** die voneinander verschiedenen Seiten der Halteeinrichtung (23; 423; 523; 723; 823) winkelig, insbesondere senkrecht, zueinander sind.

6. Bearbeitungsmaschine nach einem der vorhergehenden Ansprüche, **dadurch gekennzeichnet, dass** zwischen den Führungsschienen (24) einer jeweiligen Führungsanordnung (21) eine Antriebseinrichtung (29) zum Antrieb der jeweiligen Spindel (17) in Richtung der Spindelachse (22) angeordnet ist.

7. Bearbeitungsmaschine nach Anspruch 6, **dadurch gekennzeichnet, dass** die Antriebseinrichtung (29) einen Linearantrieb enthält.

8. Bearbeitungsmaschine nach Anspruch 7, **dadurch gekennzeichnet, dass** der Linearantrieb einen elektrischen Linearmotor (30) mit einem Primärteil an der Spindel (17) und einem Sekundärteil zwischen den Führungsschienen (24) oder umgekehrt aufweist.

9. Bearbeitungsmaschine nach Anspruch 8, **dadurch gekennzeichnet, dass** das Primärteil und/oder das Sekundärteil des Linearmotors (30) zwischen den Führungsschienen (24) einer jeweiligen Führungsanordnung (21) angeordnet sind.

10. Bearbeitungsmaschine nach einem der vorhergehenden Ansprüche, **dadurch gekennzeichnet, dass** die Halteeinrichtung (23; 423; 523; 723; 823) einen Halterahmen (34) für die Spindelgruppe (14; 414; 514; 714; 814) aufweist oder bildet.

11. Bearbeitungsmaschine nach einem der vorhergehenden Ansprüche, **dadurch gekennzeichnet, dass** sie ein Grundgestell (37, 138) zum Halten der Halteeinrichtung (23; 423; 523; 723; 823) aufweist, und dass die Halteeinrichtung (23; 423; 523; 723; 823) an dem Grundgestell (37; 138) in mindestens einer Richtung quer zu den Spindelachsen (22) verschieblich gelagert ist.

12. Bearbeitungsmaschine nach Anspruch 11, **dadurch gekennzeichnet, dass** die Halteeinrichtung (23; 423; 523; 723; 823) vertikal verfahrbar an einem horizontal verfahrbaren Horizontalschlitten (39; 139) des Grundgestells (37) oder horizontal verfahrbar an einem vertikal verfahrbaren Vertikalschlitten des Grundgestells (37) angeordnet ist.

13. Bearbeitungsmaschine nach einem der vorhergehenden Ansprüche, **dadurch gekennzeichnet, dass** die Spindelgruppe (14; 414; 514; 714; 814) relativ zu einer zweiten derartigen Spindelgruppe (14; 414; 514; 714; 814) oder zu einer Spindelanordnung (13a-d; 413a-d; 513a-d; 713a-d; 813a-d) der Bearbeitungsmaschine (10) verschieblich ist.

## Claims

1. Machining centre for the chip removing machining of workpieces (11), with a spindle assembly (14; 414; 514; 714; 814) with at least two spindle arrangements (13a-d; 413a-d; 513a-d; 713a-d; 813a-d) arranged adjacent to one another, wherein each spindle arrangement (13a-d; 413a-d; 513a-d; 713a-d; 813a-d) comprises a spindle (17) for mounting a chip removal tool, wherein each spindle arrangement (13a-d; 413a-d; 513a-d; 713a-d; 813a-d) is guided on a guide arrangement (21) on a retaining device (23; 423; 523; 723; 823) for the spindle assembly (14; 414; 514; 714; 814) for longitudinal movement in the direction of the spindle axis (22) of each spindle (17), each guide arrangement having an external distance (27) greater than the width of the associated spindle (17), wherein each guide arrangement (21) comprises two guide rails (24), the spacing of which defines the external distance (27) of the guide arrangement (21), **characterised in that** the guide arrangements (21) of pairs of immediately adjacent spindle arrangements (13a-d; 413a-d; 513a-d; 713a-d; 813a-d) of the spindle assembly (14; 414; 514; 714; 814) are located on facing sides of the retaining device (23; 423; 523; 723; 823), so that the spindle axes (22) of the spindles (17) are closer to one another than if the guide arrangements (21) were located on the same side of the retaining device (23; 423; 523; 723; 823).

2. Machining centre according to claim 1, **characterised in that** the different sides of the retaining device (23; 423; 523; 723; 823) are located opposite one another.

3. Machining centre according to claim 2, **characterised in that** the at least two spindle arrangements (13a-d; 413a-d; 513a-d; 713a-d; 813a-d) are arranged adjacent to one another in rows, the spindle axes (22) being located adjacent to one another in a row axis (33; 133; 433; 533) or near a row axis (33; 133; 433; 533).

4. Machining centre according to claim 3, **characterised in that** the row axis (33; 133; 433; 533) extends substantially horizontally or vertically.

5. Machining centre according to claim 1, **characterised in that** the different sides of the retaining device (23; 423; 523; 723; 823) extend at an angle, in particular at right angles, to one another.

6. Machining centre according to any of the preceding claims, **characterised in that** a drive device (27) for driving each spindle (17) in the direction of the spindle axis (22) is provided between the guide rails (24) of each guide arrangement (21).

7. Machining centre according to claim 6, **characterised in that** the drive device (29) comprises a linear drive.

8. Machining centre according to claim 7, **characterised in that** the linear drive comprises an electric linear motor (30) with a primary component on the spindle (17) and a secondary component between the guide rails (24) or vice versa.

9. Machining centre according to claim 8, **characterised in that** the primary and/or the secondary component of the linear motor (30) are/is located between the guide rails (24) of each guide arrangement (21).

10. Machining centre according to any of the preceding claims, **characterised in that** the retaining device (23; 423; 523; 723; 823) comprises or forms a retaining frame (34) for the spindle assembly (14; 414; 514; 714; 814).

11. Machining centre according to any of the preceding claims, **characterised in that** it is provided with a base frame (37, 138) for holding the retaining device (23; 423; 523; 723; 823), and **in that** the retaining device (23; 423; 523; 723; 823) is mounted on the base frame (37;138) for movement in at least one direction at right angles to the spindle axes (22).

12. Machining centre according to claim 11, **characterised in that** the retaining device (23; 423; 523; 723; 823) is mounted for vertical traverse on a horizontally movable horizontal carriage (39; 139) of the base frame (37) or for horizontal traverse on a vertically movable vertical carriage of the base frame (37)

13. Machining centre according to any of the preceding claims, **characterised in that** the spindle assembly (14; 414; 514; 714; 814) is movable relative to a second spindle assembly (14; 414; 514; 714; 814) of this type or relative to a spindle arrangement (13a-d; 413a-d; 513a-d; 713a-d; 813a-d) of the machining centre (10).

## Revendications

1. Machine d'usinage pour le travail par enlèvement de pièces usinées (11) pourvue d'un groupe de broches (14 ; 414 ; 514 ; 714 ; 814) avec au moins deux agencements de broche disposés l'un à côté de l'autre (13a-d ; 413a-d; 513a-d; 713a-d; 813a-d), chaque agencement de broche (13a-d; 413a-d ; 513a-d ; 713a-d ; 813a-d) présentant une broche (17) pour recevoir un outil d'usinage par enlèvement, chaque agencement de broche (13a-d ; 413a-d ; 513a-d ; 713a-d ; 813a-d) au niveau d'un agencement de guidage (21) étant guidé dans la direction de l'axe de broche (22) de la broche (17) respective de manière coulissante longitudinalement au niveau d'un dispositif de maintien (23 ; 423 ; 523 ; 723 ; 823) pour le groupe de broches (14 ; 414 ; 514 ; 714 ; 814), chaque agencement de guidage présentant un espacement extérieur (27) qui est supérieur à la largeur (28) de la broche (17) respective, chaque agencement de guidage (21) présentant deux rails de guidage (24) dont l'espacement définit l'espacement extérieur (27) de l'agencement de guidage (21), **caractérisée en ce que** les agencements de guidage (21) de respectivement deux agencements de broche (13a-d ; 413a-d ; 513a-d ; 713a-d ; 813a-d) directement adjacents du groupe de broches (14 ; 414 ; 514 ; 714 ; 814) sont disposés au niveau des côtés distincts l'un de l'autre et se faisant face du dispositif de maintien (23 ; 423 ; 523 ; 723 ; 823), de sorte que les axes de broche (22) des broches (17) soient agencés plus près l'un de l'autre que dans le cas d'une disposition des agencements de guidage (21) au niveau du même côté du dispositif de maintien (23 ; 423 ; 523 ; 723 ; 823).

2. Machine d'usinage selon la revendication 1, **caractérisée en ce que** les côtés distincts l'un de l'autre du dispositif de maintien (23 ; 423 ; 523 ; 723 ; 823) sont opposés l'un à l'autre.

3. Machine d'usinage selon la revendication 2, **caractérisée en ce que** les au moins deux agencements de broche (13a-d ; 413a-d ; 513a-d ; 713a-d ; 813a-d) sont disposés en série l'un à côté de l'autre, les axes de broche (22) étant agencés l'un à côté de l'autre dans un axe de série (33 ; 133 ; 433 ; 533) ou à proximité d'un axe de série (33 ; 133 ; 433 ; 533).

4. Machine d'usinage selon la revendication 3, **caractérisée en ce que** l'axe de série (33 ; 133 ; 433 ; 533) s'étend essentiellement horizontalement ou verticalement.

5. Machine d'usinage selon la revendication 1, **caractérisée en ce que** les côtés distincts l'un de l'autre du dispositif de maintien (23 ; 423 ; 523 ; 723 ; 823) sont anguleux, notamment perpendiculaires l'un par rapport à l'autre.

6. Machine d'usinage selon l'une quelconque des revendications précédentes, **caractérisée en ce que**, entre les rails de guidage (24) d'un agencement de guidage (21) respectif, un dispositif d'entraînement (29) pour entraîner la broche (17) respective est agencé dans la direction de l'axe de broche (22).

7. Machine d'usinage selon la revendication 6, **caractérisée en ce que** le dispositif d'entraînement (29) comprend un entraînement linéaire.

8. Machine d'usinage selon la revendication 7, **caractérisée en ce que** l'entraînement linéaire présente un moteur électrique linéaire (30) avec une partie principale au niveau de la broche (17) et une partie secondaire entre les rails de guidage (24) ou vice versa.

9. Machine d'usinage selon la revendication 8, **caractérisée en ce que** la partie principale et/ou la partie secondaire du moteur linéaire (30) sont agencées entre les rails de guidage (24) d'un agencement de guidage (21) respectif.

10. Machine d'usinage selon l'une quelconque des revendications précédentes, **caractérisée en ce que** le dispositif de maintien (23 ; 423 ; 523 ; 723 ; 823) présente ou forme un cadre de retenue (34) pour le groupe de broches (14 ; 414; 514; 714; 814).

11. Machine d'usinage selon l'une quelconque des revendications précédentes, **caractérisée en ce qu'**elle présente une structure de base (37 ; 138) pour retenir le dispositif de maintien (23 ; 423 ; 523 ; 723 ; 823), et **en ce que** le dispositif de maintien (23 ; 423 ; 523 ; 723 ; 823) au niveau de la structure de base (37 ; 138) est logé de manière coulissante dans au moins une direction transversale par rapport aux axes de broche (22).

12. Machine d'usinage selon la revendication 11, **caractérisée en** en ce que le dispositif de maintien (23 ; 423 ; 523 ; 723 ; 823) est agencé de façon à pouvoir se déplacer verticalement au niveau d'un coulisseau horizontal (39 ; 139) de l'armature de base (37) déplaçable horizontalement ou de façon à pouvoir se déplacer horizontalement au niveau d'un coulisseau vertical de l'armature de base (37) déplaçable verticalement.

13. Machine d'usinage selon l'une quelconque des revendications précédentes, **caractérisée en ce que** le groupe de broches (14 ; 414 ; 514 ; 714 ; 814) est coulissant par rapport à un second groupe de broches (14 ; 414 ; 514 ; 714 ; 814) de ce type ou par rapport à un agencement de broche (13a-d ; 413a-d ; 513a-d ; 713a-d ; 813a-d) de la machine d'usinage (10).
